Europäisches Patentamt

European Patent Office

Office européen des brevets

(11) Publication number: **0 175 889**
**B1**

## EUROPEAN. PATENT SPECIFICATION

(45) Date of publication of patent specification: **02.11.88**

(51) Int. Cl.⁴: **C 09 K 11/07**

(21) Application number: **85109759.2**

(22) Date of filing: **02.08.85**

(54) Use of water-soluble polymers in aqueous chemical light formulations.

(30) Priority: **24.09.84 US 653405**
**24.09.84 US 653404**
**24.09.84 US 653406**

(43) Date of publication of application:
**02.04.86 Bulletin 86/14**

(45) Publication of the grant of the patent:
**02.11.88 Bulletin 88/44**

(84) Designated Contracting States:
**AT BE CH DE FR GB IT LI NL SE**

(56) References cited:
**EP-A-0 010 844**
**EP-A-0 034 261**
**EP-A-0 059 323**
**EP-A-0 089 487**
**EP-A-0 096 749**
**EP-A-0 096 749**
**US-A-3 994 820**

(73) Proprietor: **AMERICAN CYANAMID COMPANY**
**1937 West Main Street P.O. Box 60**
**Stamford Connecticut 06904-0060 (US)**

(72) Inventor: **Baretz, Bruce H.**
**568 Old Stamford Road**
**New Canaan Connecticut 06840 (US)**
Inventor: **Trzaskos, William John**
**4416 Patriot Garth**
**Belcamp Maryland 21017 (US)**
Inventor: **Elliott, Laura**
**103 Pine Hill Avenue**
**Stamford Connecticut 06907 (US)**

(74) Representative: **Wächtershäuser, Günter, Dr.**
**Tal 29**
**D-8000 München 2 (DE)**

Courier Press, Leamington Spa, England.

## Description

### Background of the invention

The generation of chemiluminescence by the reaction of an ester or amide of an oxalic acid with a source of hydrogen peroxide in the presence of a fluorescer compound in aqueous solution is disclosed and claimed in U.S. Patent Nos. 4,053,430 and 4,282,357. Recently, U.S. Patent No. 4,462,931 has issued which discloses an improvement over the previous systems whereby a surfactant is added in minor amounts to the aqueous solution, or to solid mixtures which are then mixed with water, in order to enhance the emission intensity of the resultant system. Additional references disclosing the use of surfactants alone are Netherlands Patent Application 82-01713, filed April 26, 1982; U.S. Patent No. 3,714,054 and Israeli Application No. 59263, filed January 20, 1980. While the use of a surfactant in such systems has enhanced the emission intensity thereof, industry is still continuously on the lookout for ways and means of further enhancing the emission intensities, light capacities and efficiencies of chemiluminescent systems.

A further problem which has plagued the industry is that, in most instances, dry chemiluminescent compositions are devoid of a hydrogen peroxide source, the peroxide source being added as a solid or as a liquid beforehand to the water to which the dry chemiluminescent composition is added. While solid hydrogen peroxide producing compounds exist, it has been found that when they are used either as a part of the chemiluminescent composition and then added to water, or when added as such to the water beforehand, the generation of hydrogen peroxide is slow and consequently the generation of chemical light is not as efficient as one would desire.

### Summary of the invention

It has now been found, in accordance with the present invention, that the emission intensities of chemiluminescent systems based on oxalic acid esters or amides, fluorescers and a source of hydrogen peroxide can be materially enhanced by the incorporation of minor amounts of a water-soluble polymer or a mixture of a water-soluble polymer and a nonionic or anionic surfactant into an aqueous solution containing these ingredients or solid mixtures thereof which may be added to water to generate chemiluminescence. Alternatively, the water-soluble polymer or water-soluble polymer-surfactant mixture can be replaced by, or used in conjunction with, an acid having a pKa ranging from about 1—5. The above-mentioned additives are more effective in this regard than the surfactants described in U.S. 4,462,931 alone in that the quantum yield of light emitted is 15—35% higher when the additives of this invention are employed vis-a-vis the surfactants.

The employment of polymeric additives in organic solvent based chemiluminescent systems is disclosed in U.S. Patent Nos. 3,377,291; 3,816,325 and 3,994,820. The compositions produced in U.S. 3,377,291 are, however, gels which may be used to spread on porous cloth etc. wherein the polymer functions as a thickening agent. In U.S. 3,816,325 polymeric materials are employed so as to render the final composition immune to adverse environmental conditions such as water. Additionally, the materials can be formulated into a dry system which will not be absorbed into porous surfaces, or can be molded into specific shapes. There is no evidence, however, that the presence of the polymeric additive enhances the ultimate emission intensities of either of the systems. In U.S. 3,994,820, the light capacity of organic oxylate ester chemiluminescent systems is increased by the addition of certain polymeric materials to the system. These polymers include homopolymers and copolymers of a) poly(alkylene oxides), b) poly(vinylalkyl-ethers and esters), and c) maleic anhydride and cellulose esters whereas the polymers useful in the present invention exhibit high binding capacity, in aqueous solution, especially for substrates that possess negative charges, and function, in the present invention, in that manner. The function of the polymers in the organic systems is unknown. See also U.S. Patent Nos. 3,881,869 and 4,350,495 wherein polymers are used for chemiluminescent detection of zone.

The use of acids in conjunction with chemiluminescent systems has been disclosed in various articles including 1) Zeitschrift fur Physikalische Chemie Neue Folge, Bd, 75, S 180—184, 1971 Nikokavouras et al. The Effect of Carboxylate Ion on the Luminol Chemiluminescence; 2) Zeitschrift fur Physikalische Chemie Neue Folge, Bd, 78, S. 263—276, 1972, Atauff et al, Chemilumineszenz von Oxydationsreaktionen and 3) J. Amer. Chem. Soc. Vol. 103, 512, 1981. Rubinstein et al, Electrogenerated Chemiluminescence, 37 Aqueous Ecl Systems based on Ru(2,2'-bipyridine)$^{2+}$ and oxylate or organic acids.

The above articles are not, however, suggestive of the present invention. Specifically, whereas in the present system the acid functions by enhancing the formation of hydrogen peroxide from a hydrogen peroxide source, in the above prior art systems, the acid reacts with the oxidant to generate light at alkaline pH.

### Description of the invention inlcuding preferred embodiments

In accordance with the present invention, there is provided a composition for generating chemiluminescent emission comprising an aqueous solution of (a) a water-soluble reactant, (b) a water-soluble organic fluorescer having a spectral emission in the range from about 330 to 1000 nanometers, and (c) a third component comprising 1) a water-soluble polymer, in proportions capable of producing enhanced chemiluminescence on reaction with hydrogen peroxide, or 2) a mixture comprising a water-soluble polymer and a nonionic or anionic surfactant or, as a replacement for, or in conjunction with, component c) an acid having a pKa ranging from about 1—5.

The present invention further provides a dry composition for generating chemiluminescence comprising à dry mixture of (a) a water-soluble reactant, (b) a solid water-soluble fluorescer having a spectral emission in the range from about 330 to 1000 nanometers (d) a solid hydrogen peroxide source e.g. sodium perborate, potassium perborate, sodium carbonate peroxyhydrate, histidine perhydrate, etc., and (e) a fourth component comprising 1) a water-soluble polymer, in proportions capable of producing enhanced chemiluminescence when added to water, or 2) a mixture of a water-soluble polymer and a nonionic or anionic surfactant, or, as a replacement for, or in conjunction with, component e) a solid acid having a pKa ranging from about 1—5.

In the above compositions, the reactant is preferably a water-soluble ester, or amide, of oxalic acid.

The present invention also provides processes for generating chemiluminescence by adding effective amounts of the aforedescribed dry compositions to water or adding to the aqueous solutions an aqueous solution of hydrogen peroxide, or source of hydrogen peroxide.

The aqueous chemiluminescent systems of the present invention provide enhanced emission of light which is useful in a wide variety of applications, particularly for providing emergency light at home, on highways, and at sea.

The chemiluminescent reaction mixture contains a water-soluble reactant which generates light by reacting with hydrogen peroxide, or a source of hydrogen peroxide, in the presence of a fluorescer compound and the other additives of the present invention.

Suitable water-soluble esters of oxalic acid which may be used in the present invention as reactants are disclosed by Mohan in U.S. Patent No. 4,053,430, discussed above and incorporated herein by reference.

Illustrative examples of suitable water-soluble esters of oxalic acid include the dihydrochlorides, dihydrobromides, dihydrofluorides, di(trifluoromethane) sulfonates, dimethanesulfonates, di - p - toluenesulfonates, dimethosulfates, and diquaternary ammonium salts of the following compounds:

bis(2,6-dichloro-4-[(2-dimethylaminoethyl)methylsulfamoyl]phenyl)-oxalate.
bis(2,4-dichloro-6-[(2-dimethylaminoethyl)methylsulfamoyl]phenyl)-oxalate.
bis(2-chloro-4-[(2-dimethylaminoethyl)methylsulfamoyl]phenyl)oxalate.
bis(2-bromo-4-[(2-dimethylaminoethyl)methylsulfamoyl]phenyl)oxalate.
bis(2,6-dibromo-4-[(2-dimethylaminoethyl)methylsulfamoyl]phenyl)oxalate.
bis(3-fluoro-4-[(2-dimethylaminoethyl)methylsulfamoyl]phenyl)oxalate.
bis(2,4-dibromo-6-[(2-dimethylaminoethyl)methylsulfamoyl]phenyl)oxalate.
bis(2-fluoro-4-[(2-dimethylaminoethyl)methylsulfamoyl]phenyl)oxalate, and the like.

The preferred water-soluble ester of oxalic acid is the dihydrochloride of bis(2,4 - dichloro - 6[(2-dimethylamino - ethyl)methylsulfamoyl]phenyl)oxalate.

Suitable water-soluble amides of oxalic acid which may be used in the processes and compositions of this invention are disclosed in U.S. Patent No. 4,282,357 and in U.S. Patent No. 4,338,213.

Illustrative examples of suitable water-soluble amides of oxalic acid include the dihydrochlorides, dihydrobromides, dihydrofluorides, di(trifluoromethane) sulfonates, dimethanesulfonates, dimethosulfates, and ditetrafluoroborates of the following compounds:

N,N'-bis(2-morpholinoethyl)-N,N'-bis-(trifluoromethylsulfonyl)oxamide,
N,N'-bis(3-morpholinopropyl)-N,N'-bis(trifluoromethylsulfonyl)oxamide,
N,N'-bis[2-(2-pyridyl)ethyl]-N,N'-bis(trifluoromethylsulfonyl)oxamide,
N,N'-bis[3-(2-pyridyl)propyl]-N,N'-bis(trifluoromethylsulfonyl)oxamide,
N,N'-bis(6-morpholinohexyl)-N,N'-bis(trifluoromethylsulfonyl)oxamide,
N,N'-bis[2-(4-pyridyl)ethyl]-N,N'-bis(trifluoromethylsulfonyl)oxamide,
N,N'-bis[5-(3-pyridyl)pentyl]-N,N'-bis(trifluoromethylsulfonyl)oxamide, and the like.

The preferred water-soluble oxamide is 4,4'(oxalyl - bis[[(trifluoromethyl)sulfonyl]imino]-ethylene)bis(4 - methyl morpholinium trifluoromethanesulfonate).

The water-soluble fluorescer compounds, useful in the chemiluminescent compositions of this invention, may be defined broadly as compounds, having an emission spectral maximum between 330 and 1000 nanometers, which do not react with a hydrogen peroxide compound, or the amide, or ester, of oxalic acid, on contact. The water-soluble fluorescer may be anionic, cationic or nonionic.

Illustrative examples of suitable fluorescers including the following:

Sulfonated 5,6,11,12-tetraphenylnaphthacene sodium salts,
4-methyl-4-[2-[1-oxo-4-(1-pyrenyl)butoxy]ethyl]morpholinium methyl sulfate,
4,4'-[9,10-anthracenediylbis(1,2-ethanediyl)]bisbenzenesulfonic acid disodium salt,
4,4'-[9,10-anthracenediylbis(1,2-ethanediyl)]bisbenzenemethanol bis(monosodium sulfate),
4,4'-[9,10-anthracenediylbis(1,2-ethynediyl)]bisbenzene carboxylic acid dilithium salt,
4,4' - [6,12 - diphenyl - 5,11 - tetracenediylbis(4,1 - phenylenemethylene)bis (4 - methylmorpholinium methyl sulfate),
4,4' - [6,12 - diphenyl - 5,11 - tetracenediylbis(4,1 - phenylenemethylene)]bis (4 - trifluoromethyl-morpholinium trifluoromethyl sulfate),
2,8 - bis[3,6,9 - trioxadecyl)oxyl) - 5,11 - bis[[3,6,9 - trioxadecyl)oxyl)phenyl] - 6,12 - diphenyl-napthacene, and the like; see also U.S. Patent No. 4,366,079.

**0 175 889**

The preferred water-soluble fluorescer, referred to herein as sulfonated rubrene, is a mixture of sodium salts of sulfonated 5,6,11,12 - tetraphenylnaphthacene.

Illustrative examples of suitable fluorescers which are not water-soluble include the following compounds:

5,6,11,12-tetraphenylnaphthacene,
9,10-bis(phenylethynyl)anthracene,
5,12-bis(phenylethynyl)tetracene,
9,10-diphenylanthracene,
perylene,
pyrene,
1-chloro-9,10-bis(phenylethynyl)anthracene,
2-chloro-9,10-bis(phenylethynyl)anthracene,
1,5-dichloro-9,10-bis(phenylethynyl)anthracene,
1,8-dichloro-9,10-bisphenylethynyl)anthracene,
1-bromo-9,10-bis(phenylethynyl)anthracene,
1-fluoro-9,10-bis(phenylethynyl)anthracene,
2-methyl-9,10-bis(phenylethynyl)anthracene,
fluorescein,
rhodamine,
2,3-benzanthracene,
5,11-bis(4-(n-hexyl)phenyl)-6,12-diphenylnaphthacene,
5,11-bis[4-(n-dodecyl)phenyl]-6,12-diphenylnaphthacene,
5,11-bis[4-(2,5,8,11,14,17-hexaoctadec-1-yl)phenyl]-6,12-diphenylnaphthacene, and the like.

The molar concentrations (moles per liter of solution) of the reactant e.g. the oxalic acid ester, or amide, may vary considerably. It is only necessary that it be present in sufficient concentration to obtain chemiluminescence. The initial molar concentration is in the range of $10^{-3}$ to 5, preferably about $10^{-2}$ to 1.0.

The molar concentration of the fluorescer compound used is about $10^{-5}$ to 1, preferably about $10^{-3}$ to $10^{-1}$. The initial molar concentration of the hydrogen peroxide compound used is from about $10^{-3}$ to 10.0, preferably about $10^{-1}$ to 4.0. The mole ratio of hydrogen peroxide to reactant used ranges from about 0.5 to 100, preferably about 20 to 60.

Any water-soluble polymer may be employed to produce the novel compositions of the present invention. Examples of suitable polymers falling within the scope of the present invention include the polymerization products of alkylene oxides such as ethylene oxide, propylene oxide, hexylene oxide and mixtures thereof; polymers of vinyl acetate; polymers of vinyl pyrolidone alone or as copolymers with comonomers such as vinyl acetate, etc.; polyvinyl pyridenes, polystyrene sulfonates, polyacrylomides copolymers thereof, and the like.

The amount of water-soluble polymer employed should range from about $10^{-2}$ to about 50 percent by weight, based on the total weight of the solution. When dry admixtures are prepared, the amounts of the ingredients should vary such that they fall within the above ranges when added to water.

When employed, the chemiluminescent reaction mixture hereof may contain from about 0.1—5% by weight, preferably from about 0.75—3.5%, of an anionic or non-ionic surface-active agent, herein also referred to as "surfactant", which is not rapidly oxidized by hydrogen peroxide. The terms "surface-active agent", or "surfactant", as used herein, are defined as substances that lower the surface tension of a liquid, or the interfacial tension between two liquids.

Illustrative examples of suitable surfactants useful here include the following:

nonylphenoxy tetraethoxyethanol,
nonylphenoxy hexaethoxyethanol,
nonylphenoxy heptaethoxyethanol, nonylphenoxy nonaethoxyethanol, nonylphenoxy decaethoxyethanol,
octylphenoxyl monaethoxyethanol,
isoctylphenoxy decaethoxyethanol,
trimethylnonyl polyethyleneglycol ether,
oleyl alcohol-ethylene oxide reaction products,
sodium diamylsulfosuccinate,
sodium dihexylsulfosuccinate,
sodium bis(2-ethylhexyl)sulfosuccinate,
sodium bis(tridecyl)sulfosuccinate,
disodium N-octadecylsulfosuccinamate,
oleylamine acetate,
dilauroyl triethylene tetraamine diacetate, and the like.

Preferably, the reaction mixture contains an anionic surfactant which is a sulfate or sulfonate. Such sulfates and sulfonates include the alkali alkyl sulfates such as sodium lauryl sulfate, potassium stearyl sulfate, etc. and the alkali alkyl or alkeny sulfonate, potassium stearyl sulfonate, sodium cetyl sulfonate and the like.

As mentioned above, the present invention also encompasses the use of an acid having a pKa ranging

4

from about 1—5, inclusive, as means for increasing the generation of hydrogen peroxide from the hydrogen peroxide producing compound. Preferably, the acid is a solid, polycarboxylic acid. Specific examples of acids which may be used herein include oxalic acid, tartaric acid, citric acid, malonic acid, tricarballylic acid, adipic acid, citracomic acid, fumaric acid, glutaric acid, maleic acid, malic acid, malonic acid, succinic acid, phthalic acid and the like.

The amount of acid used should be substantially equal to the amount of hydrogen peroxide producing compound employed, said compound being employed in amounts known to those skilled in the art.

The hydrogen peroxide source employed in the compositions and processes of this invention may be an aqueous solution of hydrogen peroxide per se, or a solid hydrogen peroxide-producing compound, such as sodium perborate, potassium perborate, sodium carbonate peroxhydrate, histidine perhydrate, and the like.

The ingredients of the chemiluminescent compositions of this invention are kept separated until chemiluminescence is desired, when they may be admixed in a single step or in a series of steps. The order of admixing of the ingredients is usually not critical.

If the fluorescer compound is water-insoluble, such as rubrene, it may be dissolved in a suitable inert water-immiscible organic solvent, such as cyclohexane, and the solution added to an aqueous mixture of a hydrogen peroxide source, an effective amount of a polymer and a water-soluble reactant to produce a chemiluminescent emulsion.

Illustrative examples of suitable dry mixtures contain the following:

A) 13.23%, by weight, of 4,4'-(oxalylbis(trifluoromethylsulfonyl)imino)ethylene)-bis(4-methyl morpholinium trifluoromethanesulfonate), 2.12%, by weight of sulfonated rubrene, 1.0% by weight of poly(vinyl pyrolidone) and 83.65% by weight of sodium perborate.

B) 13.23%, by weight of 4,4'-(oxalylbis(trifluoromethylsulfonyl)imino)ethylene)bis (4-methyl morpholinium trifluoromethanesulfonate), 2.12% by weight of sulfonated rubrene, 1.0% by weight of poly(vinyl pyrolidone, 0.8% of sodium decylsulfate and 82.85% by weight of sodium perborate.

C) 13.23%, by weight, of 4,4'-(oxalylbis(trifluoromethylsulfonyl)imino)ethylene)bis (4-methyl morpholinium trifluoromethanesulfonate), 2.12% by weight of sulfonated rubrene, 1.0% by weight of poly(vinyl pyrolidone, 0.8% of sodium decylsulfate 42.85% by weight of sodium perborate, and 40.0% by weight of oxalic acid.

The following examples are set forth for purposes of illustration only and are not to be construed as limitations on the present invention except as set forth in the appended claims. All parts and percentages are by weight unless otherwise specified.

Example 1

An aqueous solution containing 0.01 mole/liter of 4,4' - [oxalylbis[(trifluoromethylsulfonyl)imino]ethylene] - bis[4 - methylmorpholinium trifluoromethanesulfonate], hereafter referred to as METQ, is mixed with 1% of poly(vinylpyrrolidone) and 0.005 mole/liter of the fluorescer rubrene sulfonate. Aqueous hydrogen peroxide is then added. The emission intensity is then measured at the wavelength of maximum emission by means of a spectroradiometer - luminometer similar to that described by Roberts and Hirt [Appl. Spectrosc., 21,250 (1967)] modified with a Jarrell-Ash Model 82-410 grating monochromator and an RCA C31034 photomultiplier with a gallium arsenide photocathode operated at 1300 V with dry ice cooling. Raw data are recorded digitally on a Hewlett-Packard 5150A thermal printer. Spectral response is corrected by calibration against a standard tungsten lamp. Absolute light intensities are obtained by deriving calibration constants based on the accepted fluorescence quantum yield (0.55) for quinine sulfate, as reported by Melhuish (N.Z. Sci. Tech., B, 37, 142 (1955)], in 0.1 N $H_2SO_4$, and by ferrioxalate actinometry [Hatchard et al., Proc. R. Soc. London, Ser. A/ 235, 518 (1956)] of the exciting light.

The light capacity (the light output in lumen hours per liter of emitting solution) is related to the chemiluminescence brightness and lifetime as described in U.S. Patent No. 3,816,326.

Chemiluminescence percent quantum yields (einsteins per mole of reactant×100) are calculated by monitoring the intensity decay at the emission maximum and calculating the intensity at each time interval in einsteins per second from the chemiluminescence spectrum. Chemiluminescence spectra are then corrected for intensity decay. The total area under the decay curve is calculated by using a combination of a Simpson's rule integration and an exponential extrapolation to infinite time as described by Roberts and Hirt. Data are processed by a Digital Equipment Corp. PDP-11/40 computer.

A comparison determination is also carried out, in the manner described above, without the polymer. The results obtained are shown below in Table I.

TABLE I
Relative chemical light yield

| | |
|---|---|
| Product of Example 1 | 0.13 |
| Product of Example 1 without polymer | 0.05 |

**Example 2**

The procedure of Example 1 is again followed except that trisodium-8-hydroxy-1,3,6-pyrenetrisulfonate is used in place of the METQ. Similar results are obtained.

**Example 3**

The replacement of the METQ of Example 1 by 2,2' - [oxalylbis[[(trifluoromethylsulfonyl)imino]ethylene]]bis[1 - methyl - pyridinium trifluoromethanesulfonate] again results in an increase in the relative chemical light yield as compared to a similar composition without polymer.

**Example 4**

Following the procedure of Example 1, except that rubrene sulfonate is replaced by rubrene, similar results are achieved.

**Example 5**

The METQ of Example 1 is replaced by 4 - methyl - 4[2 - [1 - oxo - 4 - (1 - pyrenyl)butoxy]ethyl]morpholinium methyl sulfate. Similar improved results are observed.

**Example 6**

Example 1 is again followed except that the METQ is replaced by bis(2,4 - dichloro - 6 - [(dimethylaminoethyl)methylsulfamoyl]phenyl)oxylate. Again, increased relative chemical light yield is realized.

**Example 7**

The bis(tetramethylammonium) salt of bis(2,3,6-trichloro-4-sulfophenyl) oxalate is used to replace METQ in accordance with Example 1. Excellent results are achieved.

**Example 8**

The poly(vinylpyrrolidone) of Example 1 is replaced by a copolymer of vinylpyrrolidone and vinyl acetate (60/90). Excellent results are achieved.

**Example 9**

A polyethyleneoxide-polypropyleneoxide copolymer is used to replace the polymer of Example 1. Results are equivalent.

**Example 10**

When the polymer of Example 1 is replaced by poly(styrene sulfonate), excellent results are obtained.

**Example 11**

Polyacrylamide is used to replace the polymer of Example 1 with equivalent results.

**Example 12**

A solid mixture is prepared by blending the METQ, poly(vinylpyrridone) and rubrene sulfonate of Example 1 together with solid sodium perborate and an equivalent amount of oxalic acid. Addition of the solid mixture to water substantially immediately produces a strong colored light.

**Example 13**

An aqueous solution containing 0.01 mole/liter of METQ is mixed with 1% of poly(vinyl-pyrrolidone), 0.8% of sodium dodecylsulfate and 0.005 mole/liter of the fluorescer rubene sulfonate.

A comparison determination is also carried out, in the manner described above, without the polymer. The results obtained are shown below in Table II.

TABLE II
Relative chemical light yield

| | |
|---|---|
| Product of Example 13 | 0.67 |
| Product of Example 13 without polymer | 0.34 |
| Product of Example 13 without surfactant | 0.13 |
| Polymer of Example 13 without polymer or surfactant | 0.05 |

**Example 14**

The procedure of Example 13 is again followed except that trisodium - 8 - hydroxy - 1,3,6 - pyrenetrisulfonate is used in place of the METQ. Similar results are obtained.

Example 15
The replacement of the METQ of Example 13 by 2,2' - [oxalyl-bis[[trifluoromethylsulfonyl)imino]ethylene]]bis[1 - methyl - pyridinium trifluoromethanesulfonate] again results in an increase in the relative chemical light yield as compared to a similar composition without polymer.

Example 15
Following the procedure of Example 13 except that rubrene sulfonate is replaced by rubrene, similar results are achieved.

Example 16
The METQ in Example 13 is replaced by 4 - methyl - 4[2 - [1 - oxo - 4 - (1 - pyrenyl)butoxy]ethyl]morpholinium methyl sulfate. Similar improved results are observed.

Example 17
Example 13 is again followed except that the METQ is replaced by bis[2,4 - dichloro - 6 - (2 - dimethylaminoethyl)methylsulfamoyl]phenyl]oxylate. Again, increased relative chemical light yield is realized.

Example 18
The bis(tetramethylammonium) salt of bis(2,3,6 - trichloro - 4 - sulfophenyl)oxalite is used to replace METQ in accordance with Example 13. Excellent results are achieved.

Example 19
A solid mixture is prepared by blending the METQ, poly(vinylpyrrolidone), sodium dodecylsulfate and rubrene sulfonate of Example 13 together with solid sodium perborate and an equivalent amount of tartaric acid. Addition of the solid mixture to water substantially immediately produces a strong colored light.

Example 20
The poly(vinylpyrrolidone) of Example 19 is replaced by a solid copolymer of vinylpyrrolidone and vinyl acetate (60/40). The surfactant is sodium decyl sulfate. The relative chemical light yield of 0.87.

Example 21
A polyethyleneoxide-polypropyleneoxide copolymer is used to replace the polymer of Example 19. The surfactant is sodium decyl sulfate. The relative chemical light yield is 0.53.

Example 22
When the polymer of Example 13 is replaced by poly(styrene sulfonate), excellent results are obtained.

Example 23
Polyacrylamide is used to replace the polymer of Example 13 with equivalent results.

Examples 24—26
The procedure of Example 13 is again followed except that the sodium dodecylsulfate is replaced by 24) sodium dioctyl sulfosuccinate, 25) the reaction product of nonylphenol with 4 moles of ethylene oxide, and 26) dilauroyl triethylene tetraamine diacetate. In each instance, substantially equivalent results are achieved.

Example 27
The procedure of Example 20 is again followed except that the surfactant is a nonylphenol-polyethylene oxide reaction product. The relative chemical light yield is 0.91. When the surfactant is removed the relative chemical light yield is 0.21. Replacement of the non-ionic surfactant with a commercially available cationic surfactant produces a relative chemical light yield of 0.20.

Example 28
Replacement of the sodium decyl sulfate surfactant of Example 20 with sodium dodecyl benzene sulfonate produces a relative chemical light yield if 1.00.

Examples 29—31
Replacement of the solid polymer of Example 20 with 29) a second commercially available 60/50, solid polymer of polyvinyl pyrrolidone and vinyl acetate, 30) a 60/40 polyvinyl pyrrolidone-vinyl acetate copolymer in 50% ethyl alcohol and 31) a 30/70 polyvinylpyrrolidone-vinyl acetate copolymer in 50% ethyl alcohol produces relative chemical light yields of 0.77; 0.74 and 0.76, respectively.

7

Examples 32—35

When the sodium dodecyl sulfate of Example 19 is replaced by 32) a commercially available cationic surfactant, 33) a nonyl-phenol-ethyleneoxide reaction product, 34) sodium decy sulfate and 35) sodium dodecyl benzene sulfonate, the relative chemical light yields are 0.13—0.25; 0.67 and 0.72, respectively. When the polymer is eliminated in Example 22, the relative chemical light yield is 0.22.

Examples 36—37

Following the procedure of Example 21, except that the polymer is replaced by 36) polyvinyl acetate and 37) polyvinylsulfonate, the relative chemical light yields are 0.38 and 0.38, respectively. When no polymer is used the relative chemical light yield is 0.34.

Example 38

The effects of the variation in concentration of the surfactant of the relative chemical light yield of the compositions set forth in Examples 20 and 34 are set forth in Table III, below.

TABLE III

| Surfactant concentration (M) | Example 20 composition | Example 34 composition |
|---|---|---|
| 0 | 0.26 | 0.09 |
| $7.5 \times 10^{-4}$ | 0.29 | — |
| $1.0 \times 10^{-3}$ | 0.40 | 0.07 |
| $2.5 \times 10^{-3}$ | 0.55 | 0.07 |
| $3.0 \times 10^{-3}$ | 0.71 | |
| $5.0 \times 10^{-3}$ | 0.86 | 0.26 |
| $6.0 \times 10^{-3}$ | 0.86 | — |
| $7.5 \times 10^{-3}$ | 0.85 | 0.47 |
| $1.0 \times 10^{-2}$ | 0.87 | 0.39 |
| $2.0 \times 10^{-2}$ | 0.87 | 0.50 |
| $3.0 \times 10^{-2}$ | 0.87 | 0.67 |
| $4.0 \times 10^{-2}$ | 0.76 | 0.67 |
| $5.0 \times 10^{-2}$ | 0.74 | — |

Example 39

A dry mixture of 0.25 part of METQ; 0.02 part of rubrene sulfonate; 0.1 part of poly(vinylpyrrolidone); 0.08 part of sodium dodecylsulfate; 0.92 part of sodium perborate and 0.82 part of sodium dodecylsulfate; 0.92 part of sodium perborate and 0.82 part of oxalic acid is prepared and added to water. Light emission is recorded and compared to the light emission of an identical composition devoid of the oxalic acid. The composition containing the oxalic acid emitted a five (5) times greater quantum yield of light.

Example 40

The procedure of Example 39 is again followed except that trisodium - 8 - hydroxy - 1,3,6 - pyrenetrisulfonate is used in place of the METQ. Similar results are obtained.

Example 41

The replacement of the METQ of Example 39 by 2,2' - [oxalyl-bis[[trifluoromethylsulfonyl)imino]ethylene]]bis[1 - methyl - pyridinium trifluoromethanesulfonate] again results in an increase in the relative chemical light yield as compared to a similar composition without polymer.

Example 42

Following the procedure of Example 39 except that rubrene sulfonate is replaced by rubrene, similar results are achieved.

8

**Example 43**

The METQ of Example 39 is replaced by 4 - methyl - 4[2 - [1 - oxo - 4 - (1 - pyrenyl)butoxy]ethyl]morpholinium methyl sulfate. Similar improved results are observed.

**Example 44**

Example 39 is again followed except that the METQ is replaced by bis[2,4 - dichloro - 6 - (2 - dimethylaminoethyl)methylsulfamoyl]phenyl]oxylate. Again, increased relative chemical light yield is realized.

**Example 45**

The bis(tetramethylammonium) salt of bis(2,3,6 - trichloro - 4 - sulfophenyl)oxalate is used to replace METQ in accordance with Example 39. Excellent results are achieved.

**Example 46**

The procedure of Example 39 is again followed except that the poly(vinylpyrrolidone) is omitted. Substantially equivalent results are rendered.

**Example 47**

When the sodium dodecyl sulfate of Example 39 is omitted from the composition, similar results are achieved.

**Example 48**

The poly(vinylpyrrolidone) of Example 46 is replaced by a solid copolymer of vinylpyrrolidone and vinyl acetate (60/40). The surfactant is sodium decyl sulfate. Excellent results are achieved.

**Example 49**

A polyethyleneoxide-polypropyleneoxide copolymer is used to replace the polymer of Example 48. Results are equivalent.

**Example 50**

When the polymer of Example 39 is replaced by poly(styrene sulfonate), excellent results are obtained.

**Example 51**

Polyacrylamide is used to replace the polymer of Example 39 with equivalent results.

**Examples 52—54**

The procedure of Example 39 is again followed except that the sodium dodecylsulfate is replaced by 52) sodium dioctyl sulfosuccinate, 53) the reaction product of nonylphenol with 4 moles of ethylene oxide, and 54) dilauroyl triethylene tetraamine diacetate. In each instance, substantially equivalent results are achieved.

**Example 55**

The procedure of Example 45 is again followed except that the surfactant is a nonylphenol-polyethylene oxide reaction product with singular results.

**Example 56**

Replacement of the sodium decyl sulfate surfactant of Example 46 with sodium dodecyl benzene sulfonate produces excellent results.

**Examples 57—61**

The oxalic acid of Example 39 is replaced by 57) tartaric acid, 58) succinic acid, 59) citric acid, 60) fumaric acid and 61) phthalic acid. In each instance, substantially identical results are achieved.

**Claims**

1. A composition for generating chemiluminescence comprising, in aqueous solution,

a) $10^{-3}$ to 5 molar concentration of a water-soluble reactant which generates light by reaction with hydrogen peroxide,

b) $10^{-5}$ to 1 molar concentration of a water-soluble or water-dispersible organic fluorescer having spectral emission in the range of about 300 to 1000 nanometers and

c) a third component selected from the group consisting of:

1) from about $10^{-2}$ to about 50%, by weight, based on the total weight of the solution, of a water-soluble polymer and

2) a mixture comprising

A) from about $10^{-2}$ to about 50%, by weight, based on the total weight of the solution, of a water-soluble polymer and

B) from about $10^{-2}$ to about 5.0%, by weight, based on the total weight of the solution, of a nonionic or anionic surfactant, and

as a replacement for, or in conjunction with, component c), an acid having a pKa ranging from about 1—5.

2. A composition according to Claim 1 wherein the reactant is 4,4' - [oxalylbis[(trifluoromethylsulfonyl)imino]ethylene]bis[4 - methylmorpholinium trifluoromethane sulfonate].

3. A composition according to Claim 1 wherein the fluorescer is sulfonated rubrene.

4. A composition according to Claim 1 wherein component c) is a water-soluble polymer.

5. A composition according to Claim 1 wherein component c) is a mixture of a water-soluble polymer and a nonionic or anionic surfactant.

6. A composition according to Claim 1 wherein component c) is an acid.

7. A composition according to Claim 1 wherein component c) is a mixture of a water-soluble polymer and an acid.

8. A composition according to Claim 1 wherein component c) is a mixture of a water-soluble polymer, a nonionic or anionic surfactant and an acid.

9. A dry mixture of components for making a chemiluminescent reaction by addition of the dry mixture to water, said dry mixture comprising,

a) a water-soluble reactant which generates light by reaction with hydrogen peroxide,

b) a water-soluble or water-dispersible organic fluorescer having spectral emission in the range of from about 300 to about 1000 nanometers,

d) a solid hydrogen peroxide source and

e) a fourth component selected from the group consisting of:

1) a water-soluble polymer, and

2) a mixture comprising:

A) a water-soluble polymer and

B) a nonionic or anionic surfactant, and as a replacement for, or in conjunction with, component e), an acid having a pKa ranging from about 1—5.

10. A mixture according to Claim 9 wherein the reactant is 4,4' . - [oxalyl-bis[(trifluoromethylsulfonyl)imino]ethylene]bis[4 - methylmorpholinium trifluoromethanesulfonate].

11. A mixture according to Claim 9 wherein the fluorescer is sulfonated rubrene.

12. A mixture according to Claim 9 wherein component e) is a water-soluble polymer.

13. A mixture according to Claim 9 wherein component e) is a mixture of a water-soluble polymer and a nonionic or anionic surfactant.

14. A mixture according to Claim 9 wherein component e) is a solid acid.

15. A mixture according to Claim 9 wherein component e) is a mixture of a water-soluble polymer and a solid acid.

16. A mixture according to Claim 9 wherein component e) is a mixture of a water-soluble polymer, a nonionic or anionic surfactant and a solid acid.

17. A composition according to Claim 1 wherein the polymer is poly(vinyl-pyrrolidone).

18. A mixture according to Claim 9 wherein the polymer is poly(vinyl pyrrolidone).

19. A composition according to Claim 1 wherein the polymer is a copolymer of vinyl pyrrolidone and vinyl acetate.

20. A mixture according to Claim 9 wherein the polymer is a copolymer of vinyl pyrrolidone and vinyl acetate.

21. A method for producing chemiluminescence comprising dispersing the dry mixture of Claim 9 in water.

22. A method for producing chemiluminescence comprising combining the composition of Claim 1 with hydrogen peroxide or a source of hydrogen peroxide in aqueous solution.

23. A composition according to Claim 1 wherein said surfactant is sodium decyl sulfate.

24. A composition according to Claim 9 wherein said surfactant is sodium decyl sulfate.

**Patentansprüche**

1. Zusammensetzung zur Ergeuzung von Chemilumineszenz, umfassend in wäßriger Lösung

(a) $10^{-3}$ bis 5 molare Konzentration eines wasserlöslichen Reaktanten, welcher durch Umsetzung mit Wasserstoffperoxid Licht erzeugt,

(b) $10^{-5}$ bis 1 molare Konzentration eines wasserlöslichen oder in Wasser dispergierbaren, organischen Leuchtstoffs mit einer spektralen Emission im Bereich von etwa 300 bis 1000 Nanometer und

(c) eine dritte Komponente, ausgewählt aus der Gruppe, bestehend aus

(1) von etwa $10^{-2}$ bis etwa 50 Gew.%, bezogen auf das Gesamtgewicht der Lösung, eines wasserlöslichen Polymeren und

(2) einer Mischung, umfassend

# 0 175 889

(A) von etwa $10^{-2}$ bis etwa 50 Gew.%, bezogen auf das Gesamtgewicht der Lösung, eines wasserlöslichen Polymeren und

(B) von etwa $10^{-2}$ bis etwa 5,0 Gew.%, bezogen auf das Gesamtgewicht der Lösung, eines nichtionischen oder anionischen Surfaktans, und

als Ersatz für oder in Verbindung mit Komponente (c) eine Säure mit einem pKa im Bereich von etwa 1 bis 5.

2. Zusammensetzung gemäß Anspruch 1, wobei der Reaktant 4,4' - [Oxalyl - bis - [(trifluormethylsulfonyl) - imino] - ethylen] - bis - [4 - methylmorpholinium - trifluormethansulfonat] ist.

3. Zusammensetzung gemäß Anspruch 1, wobei der Leuchtstoff sulfoniertes Rubren ist.

4. Zusammensetzung gemäß Anspruch 1, wobei die Komponente (c) ein wasserlösliches Polymeres ist.

5. Zusammensetzung gemäß Anspruch 1, wobei die Komponente (c) eine Mischung von einem wasserlöslichen Polymeren und einem nicht-ionischen oder anionischen Surfaktans ist.

6. Zusammensetzung gemäß Anspruch 1, wobei die Komponente (c) eine Säure ist.

7. Zusammensetzung gemäß Anspruch 1, wobei die Komponente (c) eine Mischung von einem wasserlöslichen Polymeren und einer Säure ist.

8. Zusammensetzung gemäß Anspruch 1, wobei die Komponente (c) eine Mischung von einem wasserlöslichen Polymeren, einem nicht-ionischen oder anionischen Surfaktans und einer Säure ist.

9. Ein trockenes Gemisch von Komponenten zur Erzeugung einer Chemilumineszenz-Reaktion durch Zugabe des trockenen Gemisches zu Wasser, wobei das trockene Gemisch umfaßt:

(a) einen wasserlöslichen Reaktanten, welcher durch Umsetzung mit Wasserstoffperoxid Licht erzeugt,

(b) einen wasserlöslichen oder in Wasser dispergierbaren, organischen Leuchtstoff mit einer spektralen Emission im Bereich von etwa 300 bis etwa 1000 Nanometer,

(d) eine feste Wasserstoffperoxid-Quelle und

(e) eine vierte Komponente, ausgewählt aus der Gruppe, bestehend aus

(1) einem wasserlöslichen Polymerem und

(2) einer Mischung, umfassend

(A) ein wasserlösliches Polymers und

(B) und nicht-ionisches oder anionisches Surfaktans, und als Ersatz für oder in Verbindung mit Komponente (e) eine Säure mit einem pKa im Bereich von etwa 1 bis 5.

10. Gemisch gemäß Anspruch 9, wobei der Reaktant 4,4' - [Oxalyl - bis - [(trifluormethylsulfonyl) - imino] - ethylen] - bis - [4-methylmorpholinium - trifluormethansulfonat] ist.

11. Gemisch gemäß Anspruch 9, wobei der Leuchtstoff sulfoniertes Rubren ist.

12. Gemisch gemäß Anspruch 9, wobei die Komponente (e) ein wasserlösliches Polymeres ist.

13. Gemisch gemäß Anspruch 9, wobei die Komponente (e) eine Mischung von einem wasserlöslichen Polymeren und einem nicht-ionischen oder anionischen Surfaktans ist.

14. Gemisch gemäß Anspruch 9, wobei die Komponente (e) eine feste Säure ist.

15. Gemisch gemäß Anspruch 9, wobei die Komponente (e) eine Mischung von einem wasserlöslichen Polymeren und einer festen Säure ist.

16. Gemisch gemäß Anspruch 9, wobei die Komponente (e) eine Mischung von einem wasserlöslichen Polymeren, einem nicht-ionischen oder anionischen Surfaktans und einer festen Säure ist.

17. Zusammensetzung gemäß Anspruch 1, wobei das Polymere Poly-(vinylpyrrolidon) ist.

18. Gemisch gemäß Anspruch 9, wobei das Polymere Poly-(vinylpyrrolidon) ist.

19. Zusammensetzung gemäß Anspruch 1, wobei das Polymere ein Copolymerisat von Vinylpyrrolidon und Vinylacetat ist.

20. Gemisch gemäß Anspruch 9, wobei das Polymere ein Copolymerisat von Vinylpyrrolidon und Vinylacetat ist.

21. Verfahren zur Erzeugung von Chemilumineszenz, umfassend das Dispergieren des trockenen Gemisches von Anspruch 9 in Wasser.

22. Verfahren zur Erzeugung von Chemilumineszenz, umfassend die Vereinigung der Zusammensetzung gemäß Anspruch 1 mit Wasserstoffperoxid oder einer Quelle von Wasserstoffperoxid in wäßriger Lösung.

23. Zusammensetzung gemäß Anspruch 1, wobei das Surfaktans Natriumdecylsulfat ist.

24. Zusammensetzung gemäß Anspruch 9, wobei das Surfaktans Natriumdecylsulfat ist.

## Revendications

1. Composition pour produire une chimiluminescence comprenant en solution aqueuse,

a) une concentration $10^{-3}$ à 5 molaires d'un composé réagissant soluble dans l'eau qui produit de la lumière par réaction avec le peroxyde d'hydrogène,

b) une concentration $10^{-5}$ à 1 molaire d'un composé fluorescent organique soluble dans l'eau ou dispersible dans l'eau ayant une émission spectrale dans la gamme d'environ 300 à 1 000 nanomètres et

c) un troisième composant choisi dans le groupe constitué par:

1). d'environ $10^{-2}$ à environ 50% en poids, par rapport au poids total de la solution, d'un polymère soluble dans l'eau et

11

2) un mélange comprenant

A) d'environ $10^{-2}$ à environ 50% en poids, par rapport au poids total de la solution, d'un polymère soluble dans l'eau et

B) d'environ $10^{-2}$ à environ 5,0% en poids, par rapport au poids total de la solution, d'un agent tensio-actif non ionique ou anionique et,

pour remplacer le composant c), ou en association avec lui, un acide ayant un $pK_a$ compris entre environ 1 et 5.

2. Composition selon la revendication 1, dans laquelle le composé réagissant est le 4,4' - [oxalylbis[(trifluorométhylsulfonyl)imino]éthylène]bis[(trifluorométhanesulfonate de 4 - méthylmorpholinium].

3. Composition selon la revendication 1, dans laquelle l'agent fluorescent est le rubrène sulfoné.

4. Composition selon la revendication 1, dans laquelle le composant c) est un polymère soluble dans l'eau.

5. Composition selon la revendication 1, dans laquelle le composant c) est un mélange d'un polymère soluble dans l'eau et d'un agent tensio-actif non ionique ou anionique.

6. Composition selon la revendication 1, dans laquelle le composant c) est un acide.

7. Composition selon la revendication 1, dans laquelle le composant c) est un mélange d'un polymère soluble dans l'eau et d'un acide.

8. Composition selon la revendication 1, dans laquelle le composant c) est un mélange d'un polymère soluble dans l'eau, d'un agent tensio-actif non ionique ou anionique et d'un acide.

9. Mélange sec de composants pour réaliser une réaction chimiluminescente par addition du mélange sec à de l'eau, ledit mélange sec comprenant,

a) un composé réagissant soluble dans l'eau qui produit de la lumière par réaction avec le peroxyde d'hydrogène,

b) un composé fluorescent organique soluble dans l'eau ou dispersible dans l'eau ayant une émission spectrale dans la gamme d'environ 300 à environ 1 000 nanomètres,

d) une source solide de peroxyde d'hydrogène, et

e) en quatrième composant choisi dans le groupe constitué par:

1) un polymère soluble dans l'eau, et

2) un mélange comprenant:

A) un polymère soluble dans l'eau et

B) un agent tensio-actif non ionique ou anionique, et pour remplacer le composant e), ou en association avec lui, un acide ayant un $pK_a$ compris entre environ 1 et 5.

10. Mélange selon la revendication 9, dans lequel le composé réagissant est le 4,4' - [oxalylbis[(trifluorométhylsulfonyl)imino]éthylène]bis[(trifluorométhanesulfonate de 4 - méthylmorpholinium].

11. Mélange selon la revendication 9, dans lequel l'agent fluorescent est le rubrène sulfoné.

12. Mélange selon la revendication 9, dans lequel le composant e) est un polymère soluble dans l'eau.

13. Mélange selon la revendication 9, dans lequel le composant e) est un mélange d'un polymère soluble dans l'eau et d'un agent tensio-actif non ionique ou anionique.

14. Mélange selon la revendication 9, dans lequel le composant e) est un acide solide.

15. Mélange selon la revendication 9, dans lequel le composant e) est un mélange d'un polymère soluble dans l'eau et d'un acide solide.

16. Mélange selon la revendication 9, dans lequel le composant e) est un mélange d'un polymère soluble dans l'eau, d'un agent tensio-actif non ionique ou anionique et d'un acide solide.

17. Composition selon la revendication 1, dans laquelle le polymère est un poly(vinylpyrrolidone).

18. Mélange selon la revendication 9, dans lequel le polymère est une poly(vinylpyrrolidone).

19. Composition selon la revendication 1, dans laquelle le polymère est un copolymère de vinylpyrrolidone et d'acétate de vinyle.

20. Mélange selon la revendication 9, dans lequel le polymère est un copolymère de vinylpyrrolidone et d'acétate de vinyle.

21. Procédé de production d'une chimiluminescence comprenant la dispersion du mélange sec de la revendication 9 dans l'eau.

22. Procédé de production d'une chimiluminescence comprenant la combinaison de la composition de la revendication 1 avec du peroxyde d'hydrogène ou une source de peroxyde d'hydrogène dans une solution aqueuse.

23. Composition selon la revendication 1, dans laquelle ledit agent tensio-actif est le décylsulfate de sodium.

24. Composition selon la revendication 9, dans laquelle ledit agent tensio-actif est le décylsulfate de sodium.